Europäisches Patentamt

European Patent Office

Office européen des brevets

(11) Veröffentlichungsnummer: **0 225 461 B1**

(12) **EUROPÄISCHE PATENTSCHRIFT**

(45) Veröffentlichungstag der Patentschrift: **22.07.92**

(51) Int. Cl.⁵: **H03H 7/46**

(21) Anmeldenummer: **86114858.3**

(22) Anmeldetag: **25.10.86**

(54) **Hausverteilnetz.**

(30) Priorität: **06.12.85 DE 3543229**

(43) Veröffentlichungstag der Anmeldung:
**16.06.87 Patentblatt 87/25**

(45) Bekanntmachung des Hinweises auf die
Patenterteilung:
**22.07.92 Patentblatt 92/30**

(84) Benannte Vertragsstaaten:
**AT CH DE ES FR IT LI NL SE**

(56) Entgegenhaltungen:

**FERNSEH & KINO TECHNIK, Band 40, Nr. 6,
Juni 1986, Seiten 259-266, Heidelberg, DE; G.
BOGGEL: "Satelliten-Empfangstechnik für
Bild und Ton"**

**FERNSEH & KINOTECHNIK, Band 39, Nr. 1,
Januar 1985, Seiten 11-14, Heidelberg, DE; S.
DINSEL: "Die Verteilung von Fernseh-
Satelliten-Signalen in Kabelnetzen"**

(73) Patentinhaber: **Richard Hirschmann GmbH &
Co.
Richard-Hirschmann-Strasse 19 Postfach
110
W-7300 Esslingen a.N.(DE)**

(72) Erfinder: **Rother, Peter
Zinkstrasse 52/1
W-7066 Baltmannsweiler(DE)**
Erfinder: **Wendel, Wolfgang
Steinbruchstrasse 62
W-7316 Köngen(DE)**
Erfinder: **Blind, Manfred
Nauener Strasse 21
W-7000 Stuttgart 70(DE)**

(74) Vertreter: **Stadler, Heinz, Dipl.-Ing.
Richard-Hirschmann-Strasse 19 Postfach
110
W-7300 Esslingen a.N.(DE)**

## Beschreibung

Die Erfindung betrifft ein Hausverteilnetz für Einzel- und Gemeinschafts-Antennenanlagen zum gemeinsamen Empfang der terrestrischen Ton- und Fernseh-Rundfunkprogramme und je eines links- und eines rechtspolarisierten Direktsatelliten-(DBS)-Fernsehprogramms, mit zwei Übertragungsleitungen zur getrennten Versorgung jeweils zweier Antennensteckdosen pro Teilnehmer-Anschlußstelle, wobei auf der einen Übertragungsleitung die linkspolarisierten und auf der anderen die rechtspolarisierten DBS-Fernsehsignale im ersten Satelliten-Zwischenfrequenzbereich übertragen werden und jede Antennensteckdose zwei Auslässe aufweist.

Ein derartiges, als Stern- oder Baumnetz ausführbares Hausverteilnetz ist bereits durch die Firmenzeitschrift "Antennenkurier" der Firma WISI, Ausgabe 2/85, Seite 8/9, bekannt. Dabei ist jeweils ein Antennensteckdosentyp für den Empfang der terrestrischen Rundfunkprogramme mit je einem Auslaß für Ton- und Fernsehrundfunk, sowie der beiden DBS-Fernsehsignale mit je einem Auslaß für links- und rechtspolarisierte Signale vorgesehen. Nachdem die beiden DBS-Fernsehsignale jedoch über die beiden Übertragungsleitungen getrennt herangeführt werden, ist die Übertragungsleitung für den gesamten Frequenzbereich (0,15-1750 MHz) (terrestrische Rundfunksignale und linkspolarisierte DBS-Fernsehsignale)durch beide Dosen jeder Teilnehmer-Anschlußstelle geführt, damit an den Antennensteckdosen für DBS-Fernsehempfang auch tatsächlich beide, das links- und das rechtspolarisierte Satellitensignal, zur Verfügung stehen. Dadurch sind außerdem bei diesem bekannten System an allen Durchgangsdosen für den DBS-Fernsehempfang vier Kabelanschlüsse und damit auch vier Anschlußklemmen erforderlich. Dies hat einerseits zur Folge, daß, insbesondere in größeren Verteilnetzen, der Material-, Herstellungs- und Installationsaufwand sehr groß ist und in Einzelfällen sogar den Aufwand übersteigt, des bei dem ebenfalls bekannten Verteilsystem mit drei Übertragungsleitungen und zwei unterschiedlichen Antennensteckdosen (je einer für terrestrischen Ton- und Fernsehrundfunk mit zwei unterschiedlichen Auslässen, sowie für die links- und rechtspolarisierten DBS-Fernsehsignale mit jeweils zwei gleichen Auslässen) nötig ist. Zum anderen ist es selbst bei Verwendung sehr dünner Koaxialkabel (die allerdings eine für viele Anwendungsfälle zu hohe Dämpfung aufweisen) wegen des hohen Platzbedarfs zumindest äußerst schwierig, derartige Antennensteckdosen in genormten und damit kostengünstigen 55mm-UP-Dosen unterzubringen; bei Benutzung dickerer Kabel mit praktisch noch vertretbarer Dämpfung im 1-GHz-Band dürfte dies sogar unmöglich sein, sodaß dafür größere Unterputzdosen vorzusehen sind, was die Kosten der Antennenanlage nicht unwesentlich erhöht. Überdies ist selbst in diesem Fall wegen der an jeder Teilnehmer-Anschlußstelle nötigen zweifachen Verbindungsleitung die Durchgangsdämpfung der betreffenden Übertragungsleitung im ersten Satelliten-Zwischenfrequenzbereich verhältnismäßig hoch. Darüberhinaus ist bei den beiden Dosentypen des bekannten Verteilnetzes nicht nur die elektrische Schaltungskonfiguration stark unterschiedlich, sondern auch ihr mechanischer Aufbau. Dies erfordert eine relativ aufwendige Lagerhaltung, Disposition und Fertigung mit unterschiedlichen Werkzeugen und Montageplätzen.

Weiterhin sind in den Antennensteckdosen für den Empfang der terrestrischen Rundfunkprogramme besondere Mittel zur ausreichenden Entkopplung der Ton- und Fernseh-Rundfunksignale vorzusehen, weil deren Frequenzbereiche zumindest einen geringen Abstand voneinander haben (z.B. 108 - 125 MHz = 17 MHz) und sich im Einzelfall sogar überlappen können (z.B. 0,15 bis 125 MHz für den Ton-Rundfunk-Auslaß und 47 bis 1750 MHz am Fernseh-Rundfunk-Auslaß).

Im ersten Fall ist zur Erzielung der erforderlichen Koppeldämpfung ein hoher Filteraufwand nötig, im zweiten Fall ist diese Dämpfung nur in Breitbandtechnik erreichbar, wobei jedoch die elektrischen Übertragungswerte zu hohen Frequenzen hin ungünstig werden und im 1-GHz-Band für viele Anwendungsfälle nicht mehr ausreichen.

Der Erfindung liegt die Aufgabe zugrunde, ein Hausverteilnetz der eingangs genannten Art zu schaffen, das bei möglichst hochwertigen Übertragungseigenschaften elektrisch und mechanisch einfach und kostengünstig aufgebaut, herstellbar und installierbar ist.

Diese Aufgabe ist dadurch gelöst, daß in beiden Übertragungsleitungen terrestrische Rundfunksignale mitübertragen werden, daß ein Auslaß der aus der Übertragungsleitung für die linkspolarisierten DBS-Fernsehsignale gespeisten Antennensteckdosen zum Empfang der terrestrischen Ton-Rundfunksignale vorgesehen ist und der andere Auslaß der aus der Übertragungsleitung für die rechtspolarisierten DBS-Fernsehsignale gespeisten Antennensteckdosen zum Empfang der terrestrischen Fernseh-Rundfunksignale.

Im Hinblick auf eine gute Entkopplung ist diese Mitübertragung zweckmäßigerweise selektiv mittels Einschleusweichen realisiert. Dabei können die terrestrischen Rundfunksignale diesen Einschleusweichen entweder breitbandig über einen Zweifach-Verteiler (Selektion erfolgt in den Empfängern), oder selektiv von den Antennen direkt bzw. über eine Weiche zum Auftrennen des breitbandigen Signals (z.B. Ausgangssignals eines Verstärkers) zugeführt werden.

Durch die erfindungsgemäße Ausführung des Verteilnetzes ist kein Durchschleifen der einen Übertragungsleitung durch beide Durchgangsdosen jeder Teilnehmer-Anschlußstelle erforderlich, womit die Durchgangsdämpfung in beiden Übertragungsleitungen geringer ist und alle Durchgangsdosen des gesamten Hausverteilnetzes nur jeweils zwei Kabelanschlüsse benötigen und dadurch in gleicher Größe herstellbar und in 55mm-Unterputzdosen montierbar sind. Da überdies die beiden Dosentypen einer Teilnehmer-Anschlußstelle gleiche Auslässe aufweisen, nämlich einen Stiftanschluß (für die terrestrischen Fernseh-Rundfunksignale bzw. die linkspolarisierten DBS-Fernsehsignale) und einen Buchsenanschluß (für die terrestrischen Ton-Rundfunksignale bzw. die rechtspolarisierten DBS-Fernsehsignale), sind sie in ihrem mechanischen Aufbau identisch ausführbar, und zwar exakt gleich den bereits seit Jahren hergestellten Antennensteckdosen für den Empfang der terrestrischen Ton- und Fernseh-Rundfunkprogramme, sodaß insgesamt auf einfache Weise ein geringerer Material-, Fertigungs- und Installationsaufwand erreicht ist.

Für die elektrische Schaltung zur Aufteilung der Hochfrequenzenergie auf zwei Auslässe in den Antennensteckdosen sind zwei Möglichkeiten praktisch besonders vorteilhaft, nämlich entweder die Verwendung eines Richtkoppler-Abzweigers mit einer in dessen Abzweig eingeschalteten Weiche zum Auftrennen in die Frequenzbereiche der terrestrischen Rundfunksignale (0,15 - 860 MHz) und der DBS-Fernsehsignale (950 - 1750 MHz), oder die Aufteilung über die beiden Abzweige zweier hintereinander geschalteter Richtkoppler-Abzweiger, deren jeder für einen dieser Frequenzbereiche optimiert ist. Während bei der ersten Alternative eine höhere Entkopplung erreichbar ist, besteht bei der zweiten die Möglichkeit, durch unterschiedliche Abzweigdämpfungen eine definierte Entzerrerwirkung zu erzeugen. Bei beiden Varianten ist der elektrische Schaltungsaufbau der Antennensteckdosen des erfindungsgemäßen Hausverteilnetzes so gestaltbar, daß für beide Dosentypen die gleichen Bauteile verwendbar sind, wobei lediglich die beiden Weichenanschlüsse bzw. die beiden Richtkopplerabzweiger zu vertauschen sind. Dadurch ist eine weitere ganz wesentliche Vereinfachung und Verbilligung der Fertigung erzielt.

Weiterhin ist bei der Erfindung das zum Stand der Technik beschriebene Problem hinsichtlich der Entkopplung zwischen den terrestrischen Ton- und Fernseh-Rundfunksignalen einfach und wirksam vermieden, da die Anschlüsse für die terrestrischen Ton- und Fernseh-Rundfunksignale in zwei getrennten Antennensteckdosen erfolgen. Die erforderliche Koppeldämpfung zwischen den betreffenden Auslässen in den beiden Antennensteckdosen einer Teilnehmer-Anschlußstelle ist sowohl bei direkter Einspeisung der beiden Frequenzbereiche aus den zugehörigen Antennen in die entsprechende Einschleusweiche als auch bei Einspeisung über eine sowieso benötigte normal aufgebaute Aufteileinrichtung (Auftrennweiche oder Verteiler) ohne weitere Hilfsmittel erreicht. Sie beträgt beispielsweise bei Antennensteckdosen mit Richtkoppler-Abzweiger und Verwendung einer Auftrennweiche mehr als 50 dB. Auch die Entkopplung zwischen den beiden Auslässen (terrestrischer Ton-Rundfunk/rechtspolarisiertes DBS-Fernsehsignal und terrestrischer Fernseh-Rundfunk/linkspolarisiertes DBS-Signal) jedes der beiden Dosentypen ist mindestens ausreichend: Bei Breitbandauskopplung mit zwei hintereinander geschalteten Richtkoppler-Auszweigern beträgt sie unabhängig von der Frequenz > 40 dB und selbst bei der Version mit einem Richtkoppler-Abzweiger und in dessen Abzweig eingeschalteter Weiche ist sie mit > 25 dB ausreichend, wobei die Weiche einfach und kostengünstig aufgebaut sein kann.

Schließlich ist durch die Erfindung der Vorteil gegeben, daß bei im Einzelfall erforderlicher Nachverstärkung wegen der etwa gleichen Pegel und Frequenzbereiche auf beiden Übertragungsleitungen in kostengünstiger Weise gleiche Verstärkertypen eingesetzt werden können.

Den Unteransprüchen sind vorteilhafte, z.T. erfinderische Ausgestaltungen des Gegenstandes nach Anspruch 1 zu entnehmen.

In aller Regel erfolgt die Betriebsspannungsversorgung der Außenbaugruppe und gegebenenfalls auch eines Vorverstärkers nicht direkt, sondern mittels einer Fernspeiseweiche. Durch die in Anspruch 2 vorgesehene Maßnahme wird für mehrere Geräte lediglich ein einziges Gehäuse benötigt, sodaß ein einfacher und kostengünstiger Aufbau dieses Teils des Verteilnetzes erreicht ist.

Sollen diese Geräte jedoch allen möglichen Einzelfällen variabel anpaßbar sein, so ist eine Ausführung des erfindungsgemäßen Hausverteilnetzes nach Anspruch 3 besonders günstig.

In den Ansprüchen 4 und 6 sind zwei prinzipielle Möglichkeiten für die elektrische Schaltung der beiden Antennensteckdosentypen angegeben, die - wie bereits ausgeführt - in vorteilhafter Weise so aufbaubar sind, daß sie - und zwar sowohl als Durchgangs- als auch als Enddosen - für beide Dosentypen jeder Teilnehmer-Anschlußstelle verwendbar sind, wobei lediglich die Anschlüsse der Weiche bzw. im zweiten Fall die beiden Richtkoppelrabzweiger zu vertauschen sind. Dabei ist es besonders zweckmäßig, den Abzweiger und die Weiche modular auszubilden. Die Schaltung gemäß Anspruch 4 zeichnet sich darüberhinaus dadurch aus, daß sie in einfacher Weise durch Weglassen des Abzweigers und Anschluß der Weiche am Doseneingang als Enddose ausbildbar ist.

Bei einem Aufbau dieser Antennensteckdose gemäß Anspruch 5 sind im Vergleich zu bekannten Hoch-Tiefpässen mit gleicher Anzahl von Bauelementen, bei denen vom Eingang her zunächst ein versteiltes Glied vorgesehen ist, die Rückwirkungen von Fehlabschlüssen, wie sie in der Praxis häufig, z.B. durch nicht belegte leerlaufende Auslässe bei Trennweichen vorkommen, auf die Übertragungswerte erheblich geringer.

Während bei Ausführungen gemäß den Ansprüchen 4 und 5 eine etwas geringere Durchgangsdämpfung erreichbar ist, was sich insbesondere bei größeren Hausverteilnetzen günstig auswirkt, zeichnen sich die Antennensteckdosen gemäß Anspruch 6 durch eine höhere Koppeldämpfung zwischen den Abzweiganschlüssen sowie die Möglichkeit aus, durch unterschiedliche Abzweigdämpfungen für die terrestrischen Rundfunk- und die DBS-Fernsehsignale eine definierte Entzerrerwirkung zum Ausgleich der unterschiedlichen Kabel- und Bauteiledämpfungen in den unterschiedlichen Frequenzbereichen zu erreichen und mittels der Optimierung jedes Abzweigers für einen der beiden Frequenzbereiche deren gegenseitige Belastung zu minimieren.

Die Anordnung von Richtkoppler-Abzweigern gemäß Anspruch 7 auf einer Steckplatine bietet bei guten elektrischen Daten einen sehr einfachen, für die maschinelle Fertigung (Bestückung und Lötung) geeigneten mechanischen Aufbau, wobei die beiden Antennensteckdosentypen sich lediglich durch die beiden Steckplatinen unterscheiden, die jedoch im Hinblick auf eine rationelle Fertigung durch gleiche Größe und gleiche Anordnung der Anschlüsse ohne zusätzliche Änderungen in die gleiche Trägerplatine einsteckbar sind.

Durch eine erfinderische Ausbildung des Richtkopplers für den ersten Satelliten-ZF-Bereich nach Anspruch 8, wie sie für den Frequenzbereich der terrestrischen Rundfunksignale wegen zu großer Länge nicht sinnvoll realisierbar ist, wird der Vorteil eines äußerst einfachen und kostengünstigen Aufbaues erreicht. Im Gegensatz zu dem bekannten Aufbau der beiden Richtkoppler-Leitungen nebeneinander in einer Ebene sind damit durch Wahl der Platinenstärke, sowie der Breite der Richtkoppler-Leiterbahnen wegen der geringen Toleranzen und Störeinflüsse durch Streufelder die in jedem Einzelfall erwünschten Übertragungskennwerte, insbesondere Abzweigdämpfung nach Größe und Frequenzabhängigkeit, sowie die Größe der Koppeldämpfung sehr viel unkritischer und exakter erreichbar. Die Breite der beiden Richtkoppler-Leitungen, sowie die Anzahl und Länge der einander direkt gegenüberliegenden Leitungsteile kann dabei selbstverständlich auch unterschiedlich sein.

Eine mäanderförmige Ausführung der Richtkoppler-Leitungen gemäß Anspruch 9 und damit die wesentliche mechanische Verkürzung der Richtkoppler-Länge kommt dem Wunsch nach einem möglichst kleinen Gehäuse entgegen. Dabei kann die Länge in einfacher Weise so bemessen werden, daß die mit wachsender Frequenz steigende Dämpfung der Kabel und Bauteile gerade ausgeglichen wird.

Bei getrennten Steckplatinen für die beiden in Anspruch 6 vorgesehenen Richtkopplerabzweiger ist eine Ausbildung gemäß Anspruch 10 besonders vorteilhaft, weil dabei lediglich ein einfaches Vertauschen der Steckplatinen zur Herstellung der beiden Dosentypen nötig ist. Dabei können selbstverständlich die Abmessungen der beiden Steckplatinen prinzipiell verschieden sein. In der Praxis ist es jedoch zumeist zweckmäßig, wenn sie gleich groß sind. In ähnlicher Weise bietet auch die Ausbildung der in Anspruch 4 vorgesehenen Weiche gemäß Anspruch 11 den Vorteil, daß beide Dosentypen mit den gleichen Bauteilen, hier lediglich durch seitenvertauschten Anschluß der Steckplatine herstellbar ist.

Die Figuren zeigen das Prinzipschaltbild eines Ausführungsbeispiels eines erfindungsgemäßen Hausverteilnetzes (Fig. 1), sowie den prinzipiellen Aufbau zweier alternativer Verteilmöglichkeiten einer darin verwendeten Antennen-Durchgangssteckdose ohne die für die Erfindung unwesentlichen Schaltungsteile. Dabei erfolgt die Verteilung in Fig. 2 durch zwei in Serie geschaltete Richtkoppler-Abzweiger, wobei der grundsätzliche Aufbau des Abzweigers für die DBS-Fernsehsignale auf einer Steckplatine in den Figuren 2a bis 2c aufgeführt ist. In Fig. 3 erfolgt die Verteilung durch je einen als Steckplatine aufgebauten Richtkoppler-Abzweiger und einen Weichenbaustein, dessen Front- und Rückansicht in den Fig. 3a, 3b und dessen Schaltbild in Fig. 3c angegeben ist.

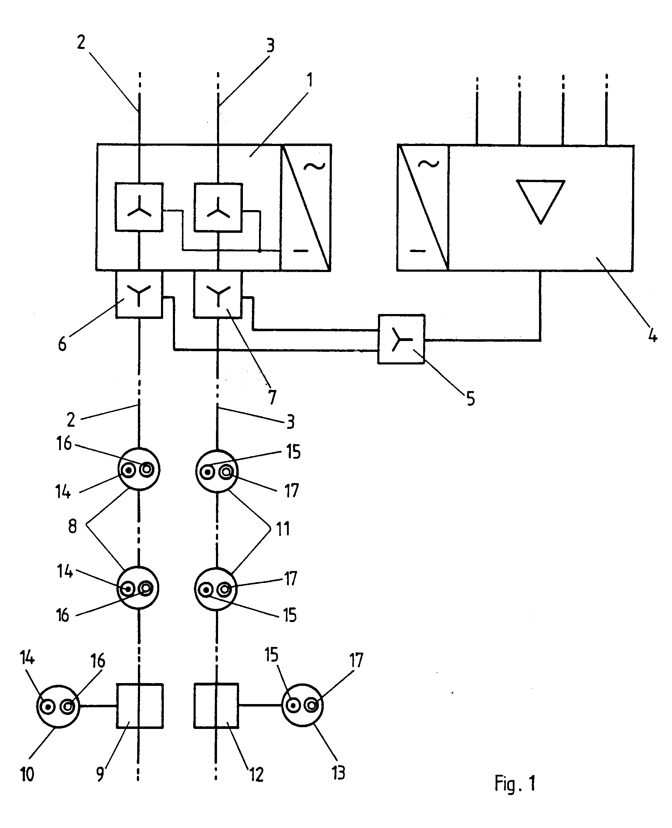

In dem Hausverteilnetz gemäß Fig. 1 versorgt eine Fernspeiseweiche 1 über zwei koaxiale Übertragungsleitungen 2, 3 für das links- und das rechtspolarisierte DBS-Fernsehsignal die nicht dargestellte Außenbaugruppe mit Betriebsgleichspannung. Die terrestrischen Rundfunk-Programme werden von nicht dargestellten Antennen einem Verstärker 4 und über dessen breitbandigen Ausgang einer Weiche 5 zugeführt, welche die terrestrischen Rundfunksignale in die Ton- und Fernseh-Rundfunksignale auftrennt. Diese beiden Frequenzbereiche werden jeweils über eine mit der Fernspeiseweiche 1 steckbar verbundene Einschleusweiche 6, 7 den beiden DBS-Fernsehsignalen derart zugeschaltet, daß die rechtspolarisierten DBS-Fernsehsignale zusammen mit den terrestrischen Fernseh-Rundfunksignalen auf der Übertragungsleitung 2 und die linkspolarisierten DBS-Fernsehsignale zusammen mit den terrestrischen Ton-Rundfunksignalen auf der Übertragungsleitung 3 den Teilnehmern zugeführt werden.

Dabei gelangen die erstgenannten Signale zu Durchgangsdosen 8, sowie über einen Abzweiger 9 zu einer Enddose 10 und die letztgenannten zu Durchgangsdosen 11, sowie über einen Abzweiger 12 zu einer Enddose 13.

An den koaxialen Stiftauslässen 14 bzw. 15 der Antennensteckdosen 8, 10 bzw. 11, 13 sind die terrestrischen Fernseh-Rundfunksignale bzw. die linkspolarisierten DBS-Fernsehsignale entnehmbar und an den koaxialen Buchsenauslässen 16 bzw. 17 die terrestrischen Ton-Rundfunksignale bzw. die rechtspolarisierten DBS-Fernsehsignale. Durch die erfindungsgemäßen Maßnahmen weisen alle Antennensteckdosen 8, 10, 11 und 13 nur zwei Kabelanschlüsse und die gleiche Auslaßkonfiguration auf, nämlich jeweils einen koaxialen Stift- und Buchsenauslaß. Sie sind daher in ihrem mechanischen Aufbau sowohl untereinander als auch zu den herkömmlichen, zur Montage in 55mm-Unterputzdosen geeigneten Antennensteckdosen für terrestrischen Ton- und Fernseh-Rundfunkempfang identisch ausgeführt, wodurch in vorteilhafter Weise ein Minimum an Material-, Fertigungs- und Installationsaufwand erreicht ist.

Außerdem ist durch die kurze Leitungsführung die Durchgangsdämpfung gering, wodurch bei größeren Hausverteilnetzen u.U. ein Nachverstärker einsparbar ist. Sollte jedoch in Einzelfällen ein solcher Verstärker nötig sein, so werden in vorteilhafter Weise etwa gleiche Pegel und Frequenzbereiche angeboten.

Durch die Anordnung der beiden Auslässe für terrestrischen Rundfunkempfang in zwei getrennten Antennensteckdosen, die über Leitungen, zwei Einschleusweichen und eine Auftrennweiche miteinander verbunden sind, ist schließlich im Gegensatz zum Stand der Technik eine hohe Entkopplung von > 50 dB ohne zusätzliche Mittel erreicht.

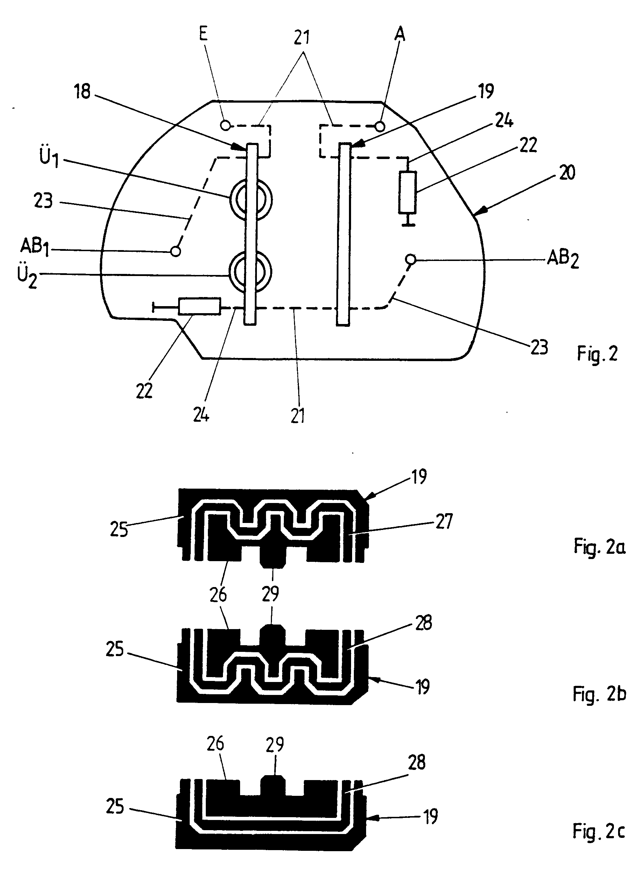

Bei den gemäß Fig. 2 ausgeführten Durchgangsdosen sind entsprechend Anspruch 6 zur Verteilung der Hochfrequenzenergie zwei mit ihren Stammleitungen hintereinander in die Übertragungsleitung eingeschaltete Richtkoppler-Abzweiger vorgesehen. Diese sind auf zwei getrennten doppelseitig kaschierten Steckplatinen 18, 19 angeordnet, die mit Vorsprüngen in Ausnehmungen einer einseitig kaschierten Trägerplatine 20 einsteckbar und durch Verlötung auf deren nicht dargestellter kaschierter Seite zugleich elektrisch angeschlossen und mechanisch befestigt sind.

In der schematischen Darstellung der Fig. 2 sind die auf der Trägerplatine 20 befindlichen Teile der vom Eingang E zum Ausgang A der Antennensteckdose führenden Stammleitung 21, sowie die zu den beiden Auslässen AB$_1$ und AB$_2$, an denen in dieser Zuordnung das terrestrische Fernseh-Rundfunksignal und das rechtspolarisierte DBS-Fernsehsignal entnehmbar sind, und den beiden Richtkoppler-Abschlußwiderständen 22 führenden Leitungen 23 und 24 gestrichelt dargestellt. Der für den Frequenzbereich der terrestrischen Fernseh-Rundfunksignale optimierte Abzweiger ist in an sich bekannter Weise (DE-OS 33 29 368) aus einem Stromübertrager Ü$_1$ und einem Spannungsübertrager Ü$_2$ aufgebaut. Der für den ersten Satelliten-Zwischenfrequenzbereich optimierte Abzweiger ist in erfinderischer Weise nach Anspruch 8 in Leitungstechnik aufgebaut, wobei die von Masseflächen 25, 26 umfaßte wellenwiderstandsrichtige Haupt-27 und Nebenleitung 28 des Streifenleitungsrichtkopplers einander gegenüberliegend auf den beiden Seiten der Steckplatine 19 angeordnet sind. Zu deren mechanischen Verkürzung ist die Hauptleitung 27 mäanderförmig ausgebildet (Fig. 2a).

Die auf der gegenüberliegenden Seite der Steckplatine 19 angeordnete Nebenleitung 28 kann die gleiche Konfiguration aufweisen wie die Hauptleitung 27 (Fig. 2b), wobei der maximale Koppelfaktor gegeben ist, oder - sofern dies im Einzelfall elektrisch günstiger ist - auch nur in Teilbereichen der Hauptleitung 27 gegenüberliegen (Fig.2c).

Von den in entsprechende Ausnehmungen der Trägerplatine 20 einzusteckenden Vorsprüngen der Steckplatinen 18, 19 ist der mittlere Vorsprung 29 etwas länger ausgebildet, wodurch der Einsteckvorgang wesentlich erleichtert bzw. verkürzt ist.

Bei dieser Antennensteckdose ist ein äußerst einfacher, kostengünstiger und exakter Aufbau der Antennensteckdosen mit geringstmöglichen Fertigungstoleranzen und entsprechend günstigen elektrischen Daten erreicht und eine einfache, weitgehend maschinelle und damit sowohl billige als genaue Herstellung ermöglicht. Da außerdem die beiden Steckplatinen 18, 19 die gleiche Anschlußkonfiguration aufweisen, sind in kostensparender Weise die beiden Dosentypen (Auslässe für den terrestrischen Fernseh-Rundfunkbereich und die rechtspolarisierten DBS-Fernsehsignale bzw. Auslässe für den terrestrischen Ton-Rundfunkbereich und die linkspolarisierten DBS-Fernsehsignale) lediglich durch Vertauschen der beiden Steckplatinen 18, 19 herstellbar.

Außerdem sind auf sehr einfache Weise und erheblich wirksamer als bei der bekannten Nebeneinanderanordnung von Leiterbahnen die elektrischen Daten durch Wahl der Platinenstärke, der Breite der Leiterbahnen, sowie der Größe der einander gegenüberliegenden Leiterbahnenflächen in weiten Grenzen wählbar.

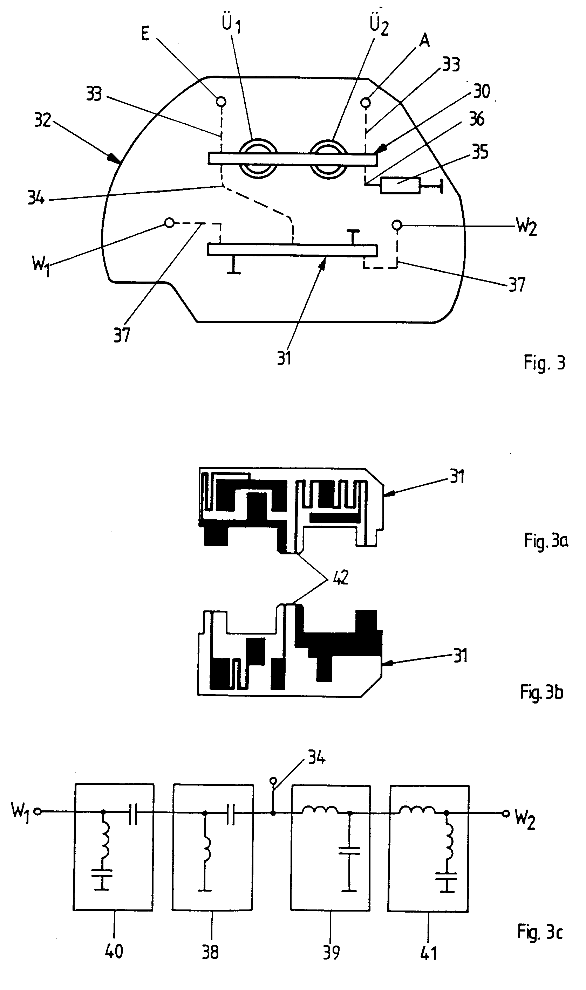

Bei den gemäß Fig. 3 ausgeführten Durchgangsdosen sind entsprechend Anspruch 4 zur Verteilung der Hochfrequenzenergie ein mit seiner Stammleitung in die Übertragungsleitung eingeschalteter breitbandiger Richtkoppler-Abzweiger sowie eine an dessen Abzweig angeschlossene Frequenzweiche zur selektiven Auftrennung in die an den beiden Auslässen zu entnehmenden Frequenzbereiche des jeweiligen Dosentyps vorgesehen.

Der Abzweiger und die Weiche sind auf getrennten beidseitig kaschierten Steckplatinen 30, 31 angeordnet, die mit Vorsprüngen in entsprechende Ausnehmungen einer einseitig kaschierten Trägerplatine 32 einsteckbar und auf deren nicht dargestellter kaschierter Seite durch Verlöten zugleich elektrisch angeschlossen und mechanisch befestigt sind.

In der schematischen Darstellung der Fig. 3 sind die auf der Trägerplatine 32 befindlichen Teile der vom Eingang E zum Ausgang A der Antennensteckdose führenden Stammleitung 33, die Abzweigleitung 34, die vom Richtkoppler zu dessen Abschlußwiderstand 35 führende Leitung 36, sowie die mit den beiden Auslässen $W_1$, $W_2$ verbundenen Weichenausgangsleitungen 37 gestrichelt dargestellt.

Der Richtkoppler-Abzweiger ist (entsprechend dem auf der Steckplatine 18 beim Ausführungsbeispiel gemäß Fig. 2) in bekannter Weise mit je einem in Rohrkerntechnik aufgebauten Stromübertrager $\ddot{U}_1$ und Spannungsübertrager $\ddot{U}_2$ ausgeführt. Die Frequenzweiche, deren Schaltung in Fig. 3c dargestellt ist, besteht aus einer Hoch/Tiefpaß-Kombination mit Versteilerungsgliedern, wobei gemäß Anspruch 5 zwischen dem Eingang und den Ausgängen $W_1$ bzw. $W_2$ in dieser Reihenfolge ein unversteiltes Hochpaß-Halbglied 38 bzw. Tiefpaß-Halbglied 39 und ein versteiltes Hochpaß-Halbglied 40 bzw. Tiefpaß-Halbglied 41 aufeinanderfolgen. Diese Schaltung gewährleistet insbesondere eine große Rückwirkungsfreiheit hinsichtlich fehlangepaßter Auslässe, wie sie in der Praxis häufig durch vom Wellenwiderstand abweichende Empfängereingangsimpedanzen oder gar einen Leerlauf bei nicht angeschlossenem Empfänger vorkommen.

Wie aus den Figuren 3a und 3b ersichtlich, ist diese Frequenzweiche auf der Steckplatine 31 vollständig in Drucktechnik ausgeführt, wodurch - ebenso wie beim Abzweiger gemäß den Fig. 2a bis 2c - auf kostengünstige Weise auch in der Mengenherstellung eine einfache und äußerst genaue maschinelle Fertigung und damit auch sehr günstige elektrische Werte mit geringsten Toleranzen erreicht sind.

Außerdem können, wie auch bei dem Ausführungsbeispiel gemäß Fig. 2, für beide Dosentypen die gleichen Bauteile verwendet werden; sie unterscheiden sich lediglich durch einen seitenvertauschten Anschluß der hinsichtlich der Anschlußkonfiguration symmetrisch aufgebauten Steckplatine 31. Darüberhinaus besteht bei dieser Schaltungsalternative die einfache Möglichkeit der wahlweisen Ausführung als Durchgangs- oder Enddose.

Zur Herstellung der letzteren braucht nur der Richtkoppler-Abzweiger weggelassen und der Weicheneingang direkt mit dem Doseneingang E verbunden zu werden. Schließlich ist auch hier der mittlere Vorsprung 42 der Steckplatine 31 zur leichteren Einführbarkeit in die Trägerplatine 32 etwas verlängert.

Insgesamt ist durch den beschriebenen Aufbau eine weitere wesentliche Fertigungsvereinfachung und Kostenreduzierung, auch in der Lagerhaltung, erzielt.

**Patentansprüche**

1. Hausverteilnetz für Einzel- und Gemeinschafts-Antennenanlagen zum gemeinsamen Empfang der terrestrischen Ton- und Fernseh-Rundfunkprogramme sowie je eines links- und eines rechtspolarisierten Direkt-Satelliten (DBS)-Fernsehprogramms, mit zwei Übertragungsleitungen zur getrennten Versorgung jeweils zweier Antennensteckdosen pro Teilnehmer-Anschlußstelle, wobei auf der einen Übertragungsleitung die linkspolarisierten und auf der anderen die rechtspolarisierten DBS-Fernsehsignale im ersten Satelliten-ZF-Bereich übertragen werden und jede Antennen-Steckdose zwei Auslässe aufweist,
dadurch gekennzeichnet, daß in beiden Übertragungsleitungen-terrestrische Rundfunksignale (2,3) mitübertragen werden, daß ein Auslaß (17) der aus der Übertragungsleitung (3) für die linkspolarisierten DBS-Fernsehsignale gespeisten Antennensteckdosen (11, 13) zum Empfang der terrestrischen Ton-Rundfunksignale vorgesehen ist und der andere Auslaß (14) der aus der Übertragungsleitung (2) für die rechtspolarisierten DBS-Fernsehsignale gespeisten Antennensteckdosen (8, 10) zum Empfang der terrestrischen Fernseh-Rundfunksignale.

2. Hausverteilnetz nach Anspruch 1 mit je einer Einrichtung zur Zusammenschaltung der terrestrischen Ton- und Fernseh-Rundfunksignale und der DBS-Fernsehsignale, zum selektiven oder breitbandigen Auftrennen der von einem bedarfsweise vorgesehenen Breitbandverstärker mit einem Ausgang gelieferten terrestrischen Rundfunksignale und zur Gleichstromversorgung der Außenbaugruppe über die Übertragungsleitungen,
dadurch gekennzeichnet, daß die Einrichtungen (1, 5, 6, 7) in einem gemeinsamen Gehäuse integriert sind.

3. Hausverteilnetz nach Anspruch 1 mit je einer Einrichtung zur Zusammenschaltung der terrestrischen Ton- und Fernseh-Rundfunksignale und der DBS-Fernsehsignale, sowie gegebenenfalls zum selektiven oder breitbandigen Auftrennen der von einem bedarfsweise vorgesehenen Breitbandverstärker mit einem Ausgang gelieferten terrestrischen Rundfunksignale und zur Gleichstromversorgung der Außenbaugruppe über die Übertragungsleitungen, dadurch gekennzeichnet, daß die Einrichtungen (1, 5, 6, 7) steckbar miteinander verbindbar sind.

4. Hausverteilnetz nach einem der Ansprüche 1 bis 3, dadurch gekennzeichnet, daß die elektrische Verteilung der Hochfrequenzenergie in jeder Durchgangsdose mittels eines in die Übertragungsleitung eingeschalteten Richtkoppler-Abzweigers (30) und einer in dessen Abzweigleitung (34) eingeschalteten Weiche (31) zur Trennung des jeweiligen DBS-Fernsehsignals von dem terrestrischen Ton- bzw. Fernseh-Rundfunksignal erfolgt.

5. Hausverteilnetz nach einem der Ansprüche 1 bis 4, mit als versteilte Hoch-Tiefpässe ausgeführten Weichen, dadurch gekennzeichnet, daß vom Eingang bzw. Ausgang zu den beiden Ausgängen ($W_1$, $W_2$) bzw. Eingängen hin in alternierender Folge jeweils wenigstens ein unversteilerter (38 bzw. 39) - mit diesem beginnend - und ein versteilerter Hoch- bzw. Tiefpaß (40 bzw. 41) aufeinanderfolgen.

6. Hausverteilnetz nach einem der Ansprüche 1 bis 3, dadurch gekennzeichnet, daß die elektrische Verteilung der Hochfrequenzenergie in jeder Durchgangsdose mittels zweier hintereinander in die Übertragungsleitung eingeschalteter Richtkoppler-Abzweiger (18, 19) erfolgt, deren einer (19) für den ersten Satelliten-ZF-Bereich und deren anderer (18) für den Frequenzbereich der terrestrischen Rundfunksignale optimiert ist, und an deren beiden Abzweiganschlüssen ($AB_2$ bzw. $AB_1$) das jeweilige DBS-Fernsehsignal bzw. die terrestrischen Ton- oder Fernseh-Rundfunksignale entnehmbar sind.

7. Hausverteilnetz nach einem der Ansprüche 4 bis 6, dadurch gekennzeichnet, daß der Richtkoppler-Abzweiger zusammen mit der Weiche bzw. die beiden Richtkopplerabzweiger zusammen in Drucktechnik auf einer doppelseitig kaschierten Platine aufgebaut sind, die in eine gemeinsame Trägerplatine einsteckbar und mit deren Anschlußpunkten leitend verbindbar ist.

8. Hausverteilnetz nach Anspruch 6 oder Anspruch 6 und 7, dadurch gekennzeichnet, daß der Richtkoppler für die DBS-Fernsehsignale als Streifenleitungsrichtkoppler aufgebaut ist, dessen Hauptleitung (27) und Nebenleitung (28) einander gegenüberliegend auf den beiden Seiten einer doppelseitig kaschierten Steckplatine (19) angeordnet sind.

9. Hausverteilnetz nach Anspruch 8, dadurch gekennzeichnet, daß die Hauptleitung (27) und die Nebenleitung (28) in dem einander gegenüberliegenden Bereich mäanderförmig aufgebaut sind und ihre elektrische Länge soviel kleiner ist als ein Viertel der mittleren Betriebswellenlänge, daß im gesamten Betriebsfrequenzbereich die Abzweigdämpfung mit steigender Frequenz abnimmt.

10. Hausverteilnetz nach Anspruch 6, mit auf getrennten Steckplatinen aufgebauten Richtkoppler-Abzweigern, dadurch gekennzeichnet, daß die Steckplatine (18) für die jeweiligen terrestrischen Rundfunk-Signale die gleiche Anschlußkonfiguration aufweist, wie diejenige (19) für die zugehörigen DBS-Fernsehsignale.

11. Hausverteilnetz nach Anspruch 4, bei dessen Antennensteckdosen jeweils die Weiche auf einer separaten Steckplatine aufgebaut ist, dadurch gekennzeichnet, daß die Anschlußkonfiguration der Steckplatine (31) derart symmetrisch ausgeführt ist, daß auch eine seitenvertauschte direkte galvanische Verbindung mit den festen Anschlußstellen einer Trägerplatine (32) ermöglicht ist.

## Claims

1. Home signal distributing apparatus for individual and community aerial facilities for the simultaneous reception of terrestrial radio and television broadcasting programmes as well as one sinistrorotatory polarized and one dextrorotatory polarized direct broadcast satellite (DBS) television programme each, equipped with two transmission lines for the separate supply of two aerial sockets for each user interface, on one of which are transmitted the sinistrorotatory polarized and one the other the dextrorotatory polarized DBS television signals in the first satellite intermediate frequency range, and each aerial socket provides two outlets,

**in such a way characterized,** that radio broadcasting signals (2, 3) are concurrently transmitted on both transmission lines, wherewith one outlet (17) of the aerial sockets (11, 13) that is supplied by the transmission line (3) for the sinistrorotatory polarized DBS television signals is intended for the reception of terrestrial radio broadcasting signals, and the other outlet (14) of the aerial sockets (8, 10) that is supplied by the transmission line (2) for the dextrorotatory polarized DBS television signals is intended for the reception of terrestrial television broadcasting signals.

2.  Home signal distributing apparatus according to claim 1, with one facility each for interconnecting the terrestrial radio and television broadcasting signals as well as the DBS television signals in order to selectively or in broadband separate the terrestrial broadcasting signals which are supplied by the outlet of a broadband amplifier which is provided in case it be needed, and for supplying the external components with direct current power over the transmission leads,

**in such a way characterized,** that the facilities (1, 5, 6, 7) are integrated within a common casing.

3.  Home signal distributing apparatus according to claim 1, with one facility each for interconnecting the terrestrial radio and television broadcasting signals and the DBS television signals as well as - if necessary - for selective or broadband separation of terrestrial radio broadcasting signals which are supplied by the outlet of a broadband amplifier, which is provided in case it be needed, and for supplying the external components with direct current power over the transmission leads,

**in such a way characterized,** that the facilities (1, 5, 6, 7) can be plug-connected.

4.  Home signal distributing apparatus according to one of claims 1 through 3,

**in such a way characterized,** that the electrical distribution of high frequency energy in each of the pass-through boxes is achieved by means of a directional coupling device junction (30) which is inserted in the transmission line and a bifurcation (31) inserted in the branching line of the junction (34), for the separation of the respective DBS television signal and the terrestrial radio and/or television broadcasting signal.

5.  Home signal distributing apparatus according to one of claims 1 through 4 with extra steep high-low-pass bifurcations,

**in such a way characterized**, that there is an alternating succession of at least one high- or low-pass (38 resp. 39) without extra steepness - beginning in this sequence - which is followed by one high- or low-pass (40 resp. 41) with extra steepness from input or output to the two outputs ($W_1$, $W_2$) or inputs.

6.  Home signal distributing apparatus according to one of claims 1 through 3,

**in such a way characterized,** that the electrical distribution of high frequency energy in each of the pass-through boxes is achieved by means of two directional coupling device junctions (18, 19) which are inserted serially in the transmission line, one of which (19) is optimized for the first satellite intermediate frequency range and the other (18) is optimized for the range of terrestrial radio broadcasting signals, and their two branch connectors ($AB_2$ resp. $AB_1$) serve as outlets for the DBS television signals and for the terrestrial radio and/or television broadcasting signals.

7.  Home signal distributing apparatus according to one of claims 4 through 6,

**in such a way characterized**, that the directional coupling device junction together with the bifurcation or respectively the two directional coupling junctions together are mounted in printed circuit technology on a double sided printed circuit board which can be inserted into a common carrier board and electrically connected to its connecting pins.

8.  Home signal distributing apparatus according to claim 6 or to claims 6 and 7,

**in such a way characterized,** that the directional coupling device for the DBS television signals is set up as a directional stripeline coupler the main line (27) and the secondary line (28) of which are placed on the opposite sides of a double sided printed circuit board (19).

9.  Home signal distributing apparatus according to claim 8,

**in such a way characterized,** that the main line (27) and the secondary line (28) are arranged in the form of meanders in the areas that are directly opposed to each other and that their electrical length is less at a factor of one fourth of the length of the mean operating wave length so that the damping effect which is caused by the branching diminishes with increasing frequency.

10. Home signal distributing apparatus according to claim 6 with directional coupling junctions mounted on separate printed circuit boards,

   **in such a way characterized,** that the carrier board (18) for the terrestrial radio signals provides the same connector configuration as the carrier board (19) for the corresponding DBS television signals

11. Home signal distributing apparatus according to claim 4 where the aerial sockets each have the bifurcation on a separate printed circuit board,

   **in such a way characterized,** that the connector configuration of the printed circuit board (31) is built symmetrically in such a way that it allows even a direct galvanic connection with fixed connecting points of a printed circuit board (32) when the sides are reversed.

## Revendications

1. Réseau répartiteur de signaux pour habitations pour des réseaux individuels et communs d'antennes destiné parallèlement à la réception de programmes de télévision et acoustiques et radiophoniques terrestres, ainsi qu'à la télédiffusion par satéllite direct DBS de programmes de télévision à ondes polarisées et dextrorsum et sinistrorsum, muni de deux lignes de transmission pour alimenter séparément deux boîtes de prise d'antenne par raccord d'abonné, une ligne transmettant les ondes DBS de télévision polarisées dextrorsum et l'autre les ondes polarisées sinistrorsum sur la première gamme de fréquences intermédiaires du satéllite, et chaque boîte de prise d'antenne disposant de deux sorties,

   **caractérisé par les faits** que dans les deux lignes de transmission sont transmis en même temps et des signaux radiophoniques terrestres (2, 3), qu'une sortie (17) des boîtes de prise d'antenne (11, 13), boîtes alimentées par la ligne de transmission (3) pour ondes DBS de télévision polarisées sinistrorsum, est prévue pour la réception de signaux acoustiques et radiophoniques terrestres et que l'autre sortie (14) des boîtes d'antenne (8,10), boîtes alimentées par la ligne de transmission (2) pour ondes DBS de télévision polarisées dextrorsum, est prévue pour la réception de signaux radiophoniques de télévision terrestres.

2. Réseau répartiteur de signaux pour habitations comme en demande 1. muni d'un dispositif pour l'interconnexion des signaux de télévision acoustiques et radiophoniques terrestres et des signaux DBS de télévision, d'un dispositif pour la séparation sélective ou à large bande des signaux radiophoniques terrestres émis par un amplificateur à large bande à une sortie qui est prévu pour le cas de besoin, et d'un dispositif pour l'alimentation du groupe extérieur en courant continu à travers les lignes de transmission,

   caractérisé par l'intégration des dispositifs (1, 5, 6, 7) dans une seule boîte.

3. Réseau répartiteur de signaux pour habitations comme en demande 1. muni d'un dispositf respectivement pour l'interconnexion des signaux de télévision acoustiques et radiophoniques terrestres et des signaux DBS de télévision, et le cas échéant, pour la séparation sélective ou à large bande des signaux radiophoniques terrestres émis par un amplificateur à large bande à une sortie qui est prévu pour le cas de besoin, et pour l'alimentation du groupe extérieur en courant continu à travers les lignes de transmission,

   **caractérisé par** les raccords mâle et femelle entre les dispositifs (1,5,6,7).

4. Réseau répartiteur de signaux pour habitations comme en une des demandes 1. à 3.,

   **caractérisé par le fait** que la distribution électrique de l'énergie à haute fréquence dans chaque boîte de passage est effectuée par un coupleur directif de branchement (30) insérré dans la ligne de transmission et par une bifurcation (31) insérrée dans la ligne de branchement (34), partant de cet élément de branchement et servant à la séparation du signal DBS de télévision du signal de télévision acoustique et/ou radiophonique terrestre.

5. Réseau répartiteur de signaux pour habitations comme en une des demandes 1. à 4. avec bifurcations sous forme de passes haut-bas en pente,

**caractérisé par** la succession alternante au moins d'une passe haut respective bas sans pente (38 resp. 39) - pour commencer - et ensuite une en pente (40 resp. 41), passant de l'entrée respectivement de la sortie aux deux sorties ($W_1$, $W_2$) respectivement aux deux entrées.

6. Réseau répartiteur de signaux pour habitations comme en une des demandes 1. à 3.,

   **caractérisé par les faits** que la distribution électrique de l'énergie à haute fréquence dans chaque boîte de passage est effectuée par deux coupleurs directifs de branchement (18,19) insérrés l'un derrière l'autre dans la ligne de transmission, dont un (19) est optimisé pour la première gamme FI du satéllite et l'autre (18) pour la gamme des fréquences des signaux radiophoniques terrestres, et leurs deux embranchements ($AB_2$ resp. $AB_1$) servant de prise pour les signaux DBS de télévision et/ou pour les signaux de télévision acoustiques et radiophoniques terrestres.

7. Réseau répartiteur de signaux pour habitations comme en une des demandes 4. à 6.,

   **caractérisé par le fait** que le coupleur directif de branchement avec la bifurcation respectivement les deux coupleurs directifs de branchement sont montés par pression sur une plaque de montage garnie des deux côtés et enfichable dans une plaque de support commune, avec les points de raccordement de laquelle un raccord conducteur est possible.

8. Réseau répartiteur de signaux pour habitations comme en demande 6. ou en demandes 6. et 7.,

   **caractérisé par le fait** que le coupleur directif pour les signaux DBS de tèlèvision est configuré comme coupleur directif guide de bande, dont les lignes principale (27) et secondaire (28) sont placées sur les côtés opposés d'une plaque enfichable garnie des deux côtés (19).

9. Réseau répartiteur de signaux pour habitations comme en demande 8,

   **caractérisé par le fait** que les lignes principale (27) et secondaire (28) sont placées de façon que leurs parties opposées forment des méandres et que leur longueur électrique est d'un tel facteur plus petite qu'un quart de la longueur d'onde moyenne sous fonctionnement que, sur toute la gamme de fréquences de fonctionnement, l'affaiblissement dû au branchement diminue par rapport à l'augmentation de la fréquence.

10. Réseau répartiteur de signaux pour habitations comme en demande 6, mais les coupleurs directifs de branchement montés sur des plaques enfichables séparées,

    **caractérisé par le fait** que la plaque enfichable (18) pour les signaux radiophoniques terrestres présente la même configuration du raccordement que celle (19) pour les signaux DBS de télévision.

11. Réseau répartiteur de signaux pour habitations comme en demande 4. dont la boîte de prise d'antenne dispose d'une plaque enfichable supplémentaire pour le placement de la bifurcation,

    **caractérisé par** une telle configuration symmétrique du raccordement de la plaque enfichable (31), qui permet même un raccordement galvanique direct à côtés renversés avec les raccords fixes d'une plaque de support (32).

Fig. 1

Fig. 2

Fig. 2a

Fig. 2b

Fig. 2c

Fig. 3

Fig. 3a

Fig. 3b

Fig. 3c